# EUROPEAN PATENT SPECIFICATION

(11) **EP 3 836 741 B1**
(45) Date of publication and mention of the grant of the patent: **27.11.2024**
(21) Application number: 18929484.6
(22) Date of filing: 09.08.2018
(51) Int. Cl.: H04W 88/02, H04B 7/06, H04W 72/04, H04L 5/00, H04W 24/10

(54) **USER EQUIPMENT AND RADIO COMMUNICATION METHOD**
BENUTZERGERÄT UND FUNKKOMMUNIKATIONSVERFAHREN
ÉQUIPEMENT UTILISATEUR ET PROCÉDÉ DE COMMUNICATION RADIO

(43) Date of publication of application: 16.06.2021
(73) Proprietor: NTT DoCoMo, Inc., Tokyo 100-6150 (JP)
(72) Inventor: HARADA, Hiroki, Tokyo 100-6150 (JP)
(74) Representative: Hoffmann Eitle
(86) International application number: PCT/JP2018/029975
(87) International publication number: WO 2020/031345

(56) References cited:
- QUALCOMM INCORPORATED: "Remaining Issues on BWP", vol. RAN WG1, no. Busan, Korea; 20180521 - 20180525, 12 May 2018 (2018-05-12), XP051463060, Retrieved from the Internet <URL:http://www.3gpp.org/ftp/tsg%5Fran/WG1%5FRL1/TSGR1%5F93/Docs> [retrieved on 20180512]
- OPPO: "Remaining details on NR RLM", vol. RAN WG1, no. Sanya, China; 20180416 - 20180420, 6 April 2018 (2018-04-06), XP051413083, Retrieved from the Internet <URL:http://www.3gpp.org/ftp/tsg%5Fran/WG1%5FRL1/TSGR1%5F92b/Docs/> [retrieved on 20180406]
- ERICSSON: "BWP and RLM in NR", vol. RAN WG2, no. Vancouver, Canada; 20180122 - 20180126, 12 January 2018 (2018-01-12), XP051386243, Retrieved from the Internet <URL:http://www.3gpp.org/ftp/tsg%5Fran/WG2%5FRL2/TSGR2%5FAHs/2018%5F01%5FNR/Docs/> [retrieved on 20180112]
- QUALCOMM INCORPORATED: "Remaining Issues on BWP", vol. RAN WG1, no. Busan, Korea; 20180521 - 20180525, 20 May 2018 (2018-05-20), XP051442560, Retrieved from the Internet <URL:http://www.3gpp.org/ftp/Meetings%5F3GPP%5FSYNC/RAN1/Docs/> [retrieved on 20180520]
- QUALCOMM INCORPORATED: "Remaining Issues on BWP", 3GPP TSG RAN WG1 MEETING #93 RL-1807368, 25 May 2018 (2018-05-25), XP051442560
- INTEL CORPORATION: "Summary of Discussion for NR Radio Link Monitoring", 3GPP TSG RAN WG1 MEETING #93 RL-1807629, 25 May 2018 (2018-05-25), XP051442674
- "Maintenance for NR mobility procedure", 3GPP TSG RAN WG1 MEETING #94 RL-1809136, 11 August 2018 (2018-08-11), XP051516506

## Description

### Technical Field

The present disclosure relates to a user terminal and a radio communication method in next-generation mobile communication systems.

### Background Art

In the UMTS (Universal Mobile Telecommunications System) network, the specifications of Long Term Evolution (LTE) have been drafted for the purpose of further increasing high speed data rates, providing lower delays and so on (see Non-Patent Literature 1). Further, for the purpose of further increasing the capacity and sophistication of LTE (LTE Rel. 8, 9), LTE-A (LTE Advanced, LTE Rel. 10-14) have been drafted.

The succeeding systems of LTE (which are also referred to as, for example, "FRA (Future Radio Access)," "5G (5th generation mobile communication system)," "5G+ (plus)," "NR (New Radio)," "NX (New radio access)," "EX (Future generation radio access)," "LTE Rel. 14" or "LTE Rel. 15 or later versions" or the like) are also under study. Non Patent Literature 1 and 2 relate to BWP and RLM in NR and DCI signalling design for active BWP switching.

In the existing LTE system (LTE Rel. 8 to 14), monitoring of radio link quality (radio link monitoring (RLM)) is performed. When a radio link failure (RLF) is detected by the RLM, a re-establishment of RRC (Radio Resource Control) connection is requested for a user terminal (user equipment (UE)).

### Citation List

### Non Patent Literature

Non Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010
Non Patent Literature 2: ERICSSON: "BWP and RLM in NR", 3GPP DRAFT; R2-1800593 - BWP AND RLM IN NR, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Vancouver, Canada; 20180122 - 20180126 12 January 2018 (2018-01 -12)
Non Patent Literature 3: QUALCOMM INCORPORATED: "Remaining Issues on BWP", 3GPP DRAFT; R1-1807368 REMAINING ISSUES ON BWP, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Busan, Korea; 20180521 - 20180525 20 May 2018 (2018-05-20)

### Summary of Invention

### Technical Problem

In future radio communication systems (for example, NR), it is also considered to perform a procedure to detect a beam failure and switch to another beam (which may also be referred to as "beam failure recovery (BFR) procedure," "BFR" and so on).

Further, use of one or more partial frequency bands (also referred to as "partial bands," "bandwidth parts (BWPs)" and so on) in a carrier (also referred to as component carrier (CC), system band and so on) for DL and/or UL communication (DL/UL communication) has been under study in NR.

When a plurality of BWPs used for DL/UL communication are configured in the carrier, activation/deactivation of the plurality of BWPs is controlled by switching. That is, the BWP that the UE applies for transmission and reception of signals is switched. The operation of switching BWP in this way may be called BWP switching.

By the way, when performing a radio link monitoring (RLM) operation or beam failure detection (BFD) operation, the UE evaluates the measurement result based on the received reference signal (for example, DL RS) and reports the evaluation result (or measurement result) to the base station as necessary. On the other hand, the reference signal applied to the RLM operation or the BFD operation may be configured for each BWP.

In such a case, how to control the operation using the reference signal (for example, RLM operation or BFD operation) by switching the BWP becomes a problem. Communication quality may degrade if the RLM operation or the BFD operation is not performed properly.

Therefore, one of the objects of the present disclosure is to provide a user terminal and a radio communication method capable of suppressing degradation of communication quality even when performing BWP switching.

### Solution to Problem

The subject-matter of the independent claims solves the above technical problem. The dependent claims describe further preferred embodiments.

### Advantageous Effects of Invention

According to one aspect of the present disclosure, degradation of communication quality can be suppressed even when BWP switching is performed.

### Brief Description of Drawings

Figs. 1A to 1C are diagrams showing an example of a BWP configuration scenario.
Fig. 2 is a diagram showing an example of activation/deactivation control of a BWP.
Fig. 3A and Fig. 3B are diagrams showing an example in which an RS (or RS set) is configured for each BWP.
Fig. 4A and Fig. 4B are diagrams showing an example of an RLM/BFD operation in BWP switching.
Fig. 5 is a diagram showing another example of an RLM/BFD operation in BWP switching.
Fig. 6 is a diagram showing an example of a schematic configuration of a radio communication system according to one embodiment.
Fig. 7 is a diagram showing an example of an overall configuration of a base station according to one embodiment.
Fig. 8 is a diagram showing an example of a functional configuration of the base station according to one embodiment.
Fig. 9 is a diagram showing an example of an overall configuration of a user terminal according to one embodiment.
Fig. 10 is a diagram showing an example of a functional configuration of the user terminal according to one embodiment.
Fig. 11 is a diagram showing an example of a hardware structure of the base station and the user terminal according to one embodiment.

### Description of Embodiments

Allocation of carrier (also referred to as "CC (Component Carrier)," "cell," "system band" and so on) with a broader bandwidth (100 to 800 MHz, for example) than that in existing LTE systems (LTE Rel. 8 to 13, for example) has been under study in NR.

Further, NR is expected to have both a user terminal (also referred to as a WB (Wideband) UE, single carrier WB UE and so on) having a capability of performing transmission and/or reception (transmission/reception) over the entire carrier and a user terminal (also referred to as a BW (Bandwidth) reduced UE and so on) with no capability of performing transmission/reception over the entire carrier.

Thus, the future radio communication systems are expected to have a plurality of user terminals (various BW UE capabilities) in a supported bandwidth. In view of this, semi-persistent configuring of one or more partial frequency bands in a carrier has been under study. Each frequency band (for example, 50 MHz or 200 MHz and so on) in the carrier is referred to as a partial band, a BWP (bandwidth part), or the like.

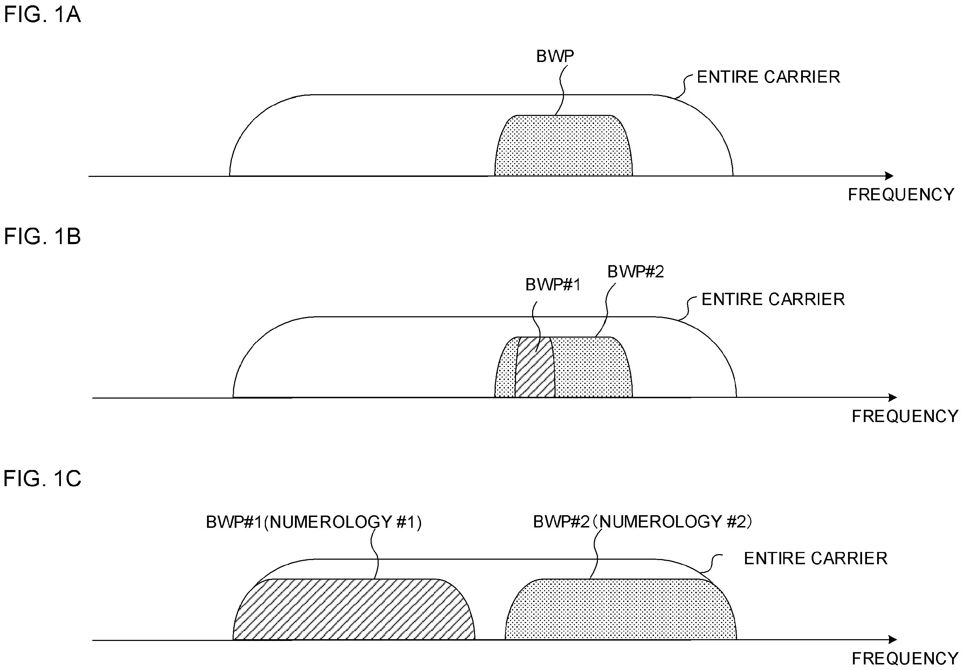

Fig. 1 is a diagram showing an example of a BWP configuration scenario. Fig. 1A shows a scenario (Usage scenario #1) in which one BWP is configured for a user terminal in one carrier. For example, in Fig. 1A, a BWP of 200 MHz is configured in a carrier of 800 MHz. Activation or deactivation of the BWP may be controlled.

The activation of the BWP means making the BWP available (or transition to the available state), and is also referred to as activation or enabling of configuration information of the BWP (BWP configuration information). The deactivation of the BWP means making the BWP unavailable (or transition to the unavailable state), and is also referred to as deactivation or disabling of the BWP configuration information. When a BWP is scheduled, then the BWP is activated.

Fig. 1B shows a scenario (Usage scenario #2) in which a plurality of BWPs is configured for a user terminal in one carrier. As shown in Fig. 1B, at least a part of the plurality of BWPs (for example, BWPs #1 and #2) may overlap with each other. For example, in Fig. 1B, the BWP #1 is a partial frequency band of the BWP #2.

Further, activation or deactivation of at least one of the plurality of BWPs may be controlled. For example, in Fig. 1B, the BWP #1 may be activated when data transmission/reception is not performed, and the BWP #2 may be activated when data transmission/reception using the BWP #2 is performed. Specifically, when data transmission/reception using the BWP #2 occurs, switching from the BWP #1 to the BWP #2 is performed, and when, after the transmission/reception of data ends, there is no scheduling of BWP #2 for the given time, and a timer expires or data transmission/reception using the BWP #1 occurs, switching from the BWP #2 to the BWP #1 may be performed. As a result, the user terminal does not need to constantly monitor the BWP #2 with a broader bandwidth than the BWP #1, and therefore power consumption can be reduced.

Fig. 1C shows a scenario (Usage scenario #3) in which a plurality of BWPs is configured in different bands within one carrier. As shown in Fig. 1C, different numerologies may be applied to the plurality of BWPs. Here, the numerologies may be at least one of subcarrier interval, symbol length, slot length, cyclic prefix (CP) length, slot (transmission time interval (TTI)) length, the number of symbols per slot, and the like.

For example, in Fig. 1C, the BWPs #1 and #2 with different numerologies are configured for a user terminal having the capability of performing transmission/reception over the entire carrier. In Fig. 1C, at least one BWP configured for the user terminal is activated or deactivated, and one or more BWPs may be active at a certain time point.

Note that, the BWP used for DL communication may be referred to as DL BWP (frequency band for DL), and the BWP used for UL communication may be referred to as UL BWP (frequency band for UL). The frequency bands of the DL BWP and the UL BWP may at least partially overlap with each other. Hereinafter, the DL BWP and the UL BWP are referred to as BWP, when they are not distinguished from each other.

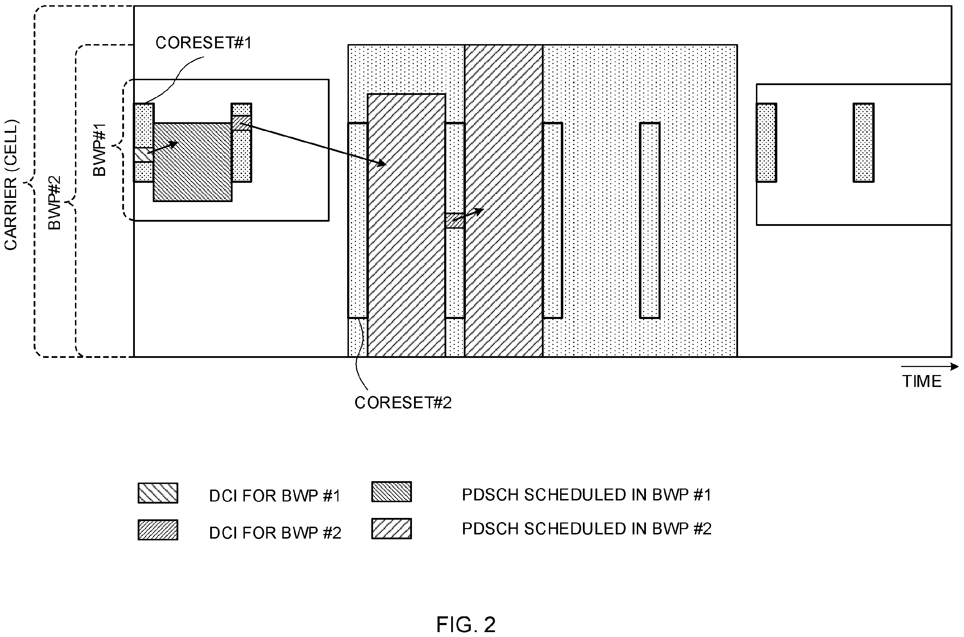

Control on activation and/or deactivation (also referred to as activation/deactivation or switching, determination, or the like) of the BWP will be described with reference to Fig. 2. Fig. 2 is a diagram showing a control example in a case of activating one BWP (switching activated BWPs). Note that, in Fig. 2, the scenario shown in Fig. 1B is assumed, but the activation/deactivation control of the BWP can be applied as appropriate to the scenarios shown in Figs. 1A and 1C or the like.

Furthermore, in Fig. 2, it shall be that a control resource region (CORESET #1) that is an allocation candidate of a DL control channel (DCI) is configured in the BWP #1, and CORESET #2 is configured in the BWP #2. Each of the CORESET #1 and the CORESET #2 is provided with one or more search spaces. For example, in the CORESET #1, the DCI for the BWP #1, and the DCI for the BWP #2 may be arranged in the same search space, or may be arranged in different search spaces.

Furthermore, in Fig. 2, when the BWP #1 is in the active state, the user terminal monitors the search space in the CORESET #1 within a given periodicity (for example, for each one or more slots, for each one or more mini-slots, or for each given number of symbols) (blind decoding), to detect the DCI for the user terminal.

The DCI may include information indicating the BWP corresponding to the DCI (BWP information). The BWP information is, for example, a BWP index, and may be a given field value in the DCI. Furthermore, the BWP index information may be included in a DCI for a downlink scheduling, may be included in a DCI for an uplink scheduling, or may be included in a DCI of a common search space DCI. The user terminal may determine the BWP for which PDSCH or PUSCH is scheduled by the DCI, based on the BWP information in the DCI.

When the user terminal detects the DCI for the BWP #1 in the CORESET #1, the user terminal receives PDSCH scheduled in (allocated to) a given time and/or frequency resource (time/frequency resource) in the BWP #1 based on the DCI for the BWP #1.

Further, when the user terminal detects the DCI for the BWP #2 in the CORESET #1, the user terminal deactivates the BWP #1 and activates the BWP #2. The user terminal receives the PDSCH scheduled in a given time/frequency resource of the DL BWP #2 based on the DCI for the BWP #2 detected in the CORESET #1.

When the BWP #2 is activated, the user terminal monitors the search space in the CORESET #2 within a given periodicity (for example, for each one or more slots, for each one or more mini-slots, or for each given number of symbols) (blind decoding), to detect the DCI for the BWP #2. The user terminal may receive the PDSCH scheduled in a given time/frequency resource of the BWP #2 based on the DCI for the BWP #2 detected in the CORESET #2.

Furthermore, when a data channel (for example, PDSCH and/or PUSCH) in the activated BWP is not scheduled for a given period of time, the BWP may be deactivated. For example, in Fig. 2, the user terminal deactivates the BWP #2 and activates the BWP #1 because PDSCH is not scheduled in the DL BWP #2 for a given period of time.

The maximum number of BWPs that can be configured per carrier may be predetermined. For example, in frequency division duplex (FDD) (paired spectrum), a maximum of four DL BWPs and a maximum of four UL BWPs may be configured per carrier. The UE performs reception of data and so on by using the activated BWP (for example, one BWP) among the maximum N (for example, N=4) BWPs configured by a base station.

Further, a default BWP may be defined in the user terminal. The default BWP may be the above-mentioned initial active BWP, or may be configured by higher layer signaling (for example, RRC signaling).

By the way, when performing a radio link monitoring (RLM) operation or beam failure detection (BFD) operation, the UE evaluates the measurement result based on the received reference signal (for example, DL RS) and reports the evaluation result (or measurement result) to the base station as necessary.

### <RLM operation>

In the NR, it is considered to support one or more RLM Reference Signal (RLM) resources. The RLM-RS resource may be associated with a resource and/or port for a synchronization signal block (SSB) or RS for channel state measurement (CSI-RS (Channel State Information RS)). Note that the SSB may also be referred to as a "SS/PBCH (Physical Broadcast Channel) block".

The RLM-RS may be at least one of a primary synchronization signal (PSS (Primary SS)), a secondary synchronization signal (SSS (Secondary SS)), a mobility reference signal (MRS (Mobility RS)), CSI-RS, a demodulation reference signal (DMRS), a beam-specific signal and so on, or a signal configured by expanding and/or modifying these (for example, a signal configured by changing the density and/or the period).

The UE may be configured with measurements using RLM-RS resources by higher layer signaling. It may be assumed that the UE configured with the measurement determines whether the radio link is in the synchronous state (IS: In-Sync) or in the asynchronous state (OOS: Out-Of-Sync) based on the measurement result in the RLM-RS resource. The default RLM-RS resource for which that the UE performs the RLM when the RLM-RS resource is not configured by the base station may be specified in the specifications.

Note that, the higher layer signaling may include, for example, RRC (Radio Resource Control) signaling, MAC (Medium Access Control) signaling (for example, MAC CE (Control Element), MAC PDU (Protocol Data Unit)), broadcast information (Master Information Block (MIB), System Information Block (SIB) and so on.

The UE may determine that the radio link is IS when the radio quality estimated (may be called measured) based on at least a given number of resources out of all the configured RLM-RS resources exceeds a first threshold value (which may be called Qin) .

The UE may determine that the radio link is OOS when the radio quality estimated based on all the configured RLM-RS resources is less than a second threshold value (which may be called Qₒᵤₜ). It should be noted that these radio qualities may be, for example, radio qualities corresponding to the block error rate (BLER) of a hypothetical PDCCH.

IS/OOS determined at regular intervals (periodically) may be referred to as periodic IS (PIS)/periodic OOS (P-OOS). For example, the IS/OOS determined using RLM-RS may be P-IS/OOS.

IS/OOS may be notified (indicated) from the physical layer to a higher layer (for example, MAC layer, RRC layer, etc.) in the UE, and RLF may be determined based on the IS/OOS notification.

The UE activates (starts) a timer T310 when it receives the OOS notification for a given cell (for example, the primary cell) N310 times. If the IS notification regarding the given cell is received N311 times while the timer T310 is activated, the timer T310 is stopped. When the timer T310 expires, the UE determines that RLF has been detected for the given cell.

Note that, the RLF determination method is the same as that of existing LTE, but is not limited to this. Names such as N310, N311 and T310 are not limited to these. The T310 may be referred to as a timer for RLF detection or the like. N310 may be referred to as the number of times of OOS notification for activating the timer T310. N311 may be referred to as the number of times of IS notification for stopping the timer T310.

### <BFD operation>

In the NR, it is considered to support one or more BFD reference signal (BFD-RS) resources used for beam recovery (or beam management). The RLM-RS resource may be associated with a resource and/or port for a synchronization signal block (SSB) or RS for channel state measurement (CSI-RS (Channel State Information RS)). Note that the SSB may also be referred to as a "SS/PBCH (Physical Broadcast Channel) block".

The BFD-RS may be at least one of a primary synchronization signal (PSS (Primary SS)), a secondary synchronization signal (SSS (Secondary SS)), a mobility reference signal (MRS (Mobility RS)), a signal included in the SSB, CSI-RS, a demodulation reference signal (DMRS), a beam-specific signal and so on, or a signal that is configured by expanding, modifying and so on. The RS measured for beam recovery (or beam management) may be referred to as RS for beam failure detection (BFD-RS) and so on.

When the radio wave from the base station is disturbed, the UE cannot detect the BFD-RS (or the received quality of the RS is deteriorated). Such disturbance may occur due to the effect of obstacles, fading, interference and so on between the UE and the base station, for example.

The UE detects a beam failure when a given condition is fulfilled. The UE may detect the occurrence of beam failure, for example, when the BLER (Block Error Rate) is less than the threshold value for all the configured BFD-RS (BFD-RS resource configuration). When the occurrence of a beam failure is detected, the lower layer (physical (PHY) layer) of the UE may notify (instruct) the beam failure instance to the higher layer (MAC layer).

Note that the criterion for determination is not limited to BLER, and may be reference signal received power in the physical layer (L1-RSRP). Further, instead of the RS measurement or in addition to the RS measurement, beam failure detection may be performed based on a downlink control channel (PDCCH (Physical Downlink Control Channel)) and so on. The BFD-RS may be expected to be a quasi-co-location (QCL) with the DMRS of the PDCCH monitored by the UE.

Here, the quasi-co-location (QCL) is an index indicating the statistical properties of the channel. For example, when one signal and another signal have a QCL relationship, this means that it is possible to assume that the plurality of different signals have at least one identical property out of: Doppler shift, a Doppler spread, an average delay, and a delay spread, a spatial parameter (for example, a spatial reception parameter (referred to as Spatial Rx Parameter)).

The QCL may be provided with one or more types (QCL types) having different parameters that can be assumed to be the same. For example, four QCL types A to D with different parameters that can be assumed to be the same may be provided.
- QCL type A: QCL that can be assumed to have the same Doppler shift, Doppler spread, average delay, and delay spread
- QCL type B: QCL that can be assumed to have the same Doppler shift and Doppler spread
- QCL type C: QCL that can be assumed to have the same average delay and Doppler shift
- QCL type D: QCL that can be assumed to have the same spatial reception parameter

Note that the spatial reception parameter may correspond to the reception beam of the UE (for example, reception analog beam), and the beam may be specified based on the spatial QCL. The QCL (or at least one element of the QCL) in the present disclosure may be interpreted as sQCL (spatial QCL) or QCL type-D.

Information regarding the BFD-RS (for example, an RS index, resource, the number, the number of ports, precoding, etc.), information regarding the beam failure detection (BFD) (for example, the above-mentioned threshold value) and so on may be configured in (notified to) the UE using higher layer signaling and so on. The information regarding the BFD-RS may be referred to as information regarding resources for BFR.

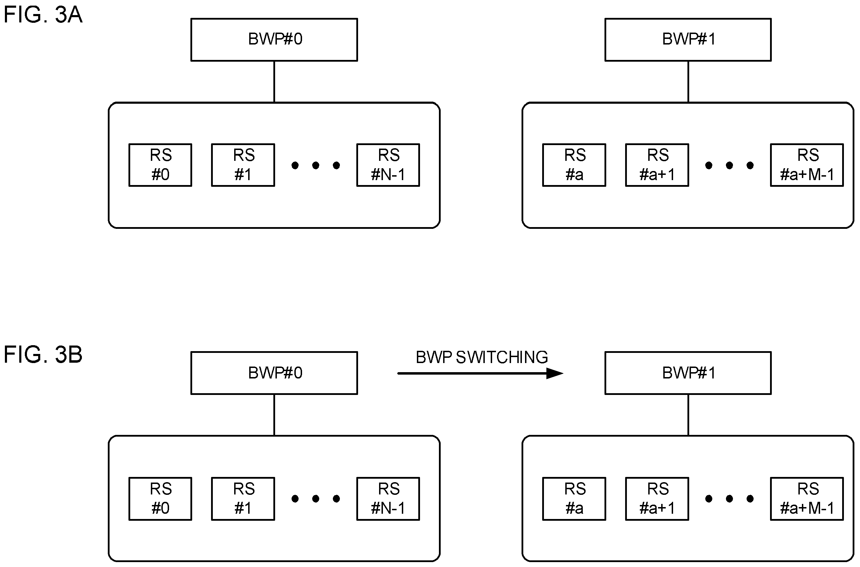

By the way, the reference signal (RLM-RS, BFD-RS, etc.) applied to the RLM operation or the BFD operation may be configured for each BWP (for example, DL BWP). For example, the base station uses higher layer signaling (e.g., RRC signaling, etc.) and configured at least one of one or more RLM-RSs (or RLM-RS sets) used for the RLM operation for each BWP in the UE, and a BFD-RS(or a BFD-RS set) used for the BFD operation in the UE (see Fig. 3A).

In Fig. 3A, the case is shown in which a first RS set including RS #0, RS #1,... RS #N-1 is configured for BWP #0, and a second RS set including RS #a, RS #a+1,... RS #a+M-1 is configured for BWP #1.

As described above, when the BWP switching is performed in the DL, the DL BWP in which the UE receives the DL is switched by an instruction from the base station (for example, DCI) or the expiration of the timer (inactivity timer). Therefore, when different RS sets (for example, at least one of RLM-RS set and BFD-RS set) are configured for each of multiple DL BWPs, the RS set may be switched due to the BWP switching (see Fig. 3B).

For example, in Fig. 3, when performing the BWP switching, the RS received before and after the switching is different. In such a case, how to control the operation based on the received RS (for example, RLM operation or BFD operation) before and after the BWP switching becomes a problem.

Therefore, the present inventors pay attention to the case that the received RS differs before and after the BWP switching, and has conceived of control in which the RS corresponding to the BWP before switching is not used for at least one of the RLM operation and the BFD operation in the BWP after the switching or, when the given conditions are fulfilled, the RS corresponding to the BWP before the switching is used for at least one of the RLM operation and the BFD operation in the BWP after the switching.

Hereinafter, embodiments according to the present disclosure will be described in detail with reference to the drawings. The following aspects may be applied independently or may be applied in combination. Note that, in the following description, the reference signal (RS) may be at least one of RLM-RS and BFD-RS, or may be another reference signal.

Further, in the following description, the BWP switching may be controlled by at least one of an instruction from the base station (for example, downlink control information, etc.) and the timer. Further, in the following description, the notification or instruction may be a notification (instance) from the physical layer to the higher layer in the UE, or may be a notification from the UE to the base station.

### (First Aspect)

In the first aspect, when the BWP switching is performed, the measurement result of the RS configured in the BWP before the BWP switching is not used for the RLM operation or the BFD operation in the BWP after the switching. The RS measurement result may be read as an RLM evaluation result, an RLM evaluation result, an RLM evaluation content, a BFD evaluation result, a BFD evaluation result, and a BFD evaluation content.

When the BWP switching is performed, the UE discards the evaluation result of at least one of RLM and BFD (hereinafter, also referred to as RLM/BFD) at the time of the BWP switching. Then, after a given period from the BWP switching, RLM/BFD evaluation is started using the RS corresponding to the BWP after the switching. The given period from the BWP switching may be a delay period caused by the BWP switching (BWP switching delay). For the BWP switching operation, the method shown in Fig. 2 above may be used.

The UE controls not to use the measurement result of the RS in the BWP before the switching when the BWP switching is performed regardless of the contents of the RS configured in the BWP before the switching and the RS configured in the BWQ after the switching.

As a result, the RLM/BFD operation of the UE can be simplified regardless of the presence or absence of the relationship between the reference signals configured in the BWPs (for example, the presence or absence of quasi-co-location). Further, even if the RS received by the UE is changed before and after the BWP switching, the RLM/BFD operation after the BWP switching can be appropriately performed. As a result, degradation of communication quality can be suppressed.

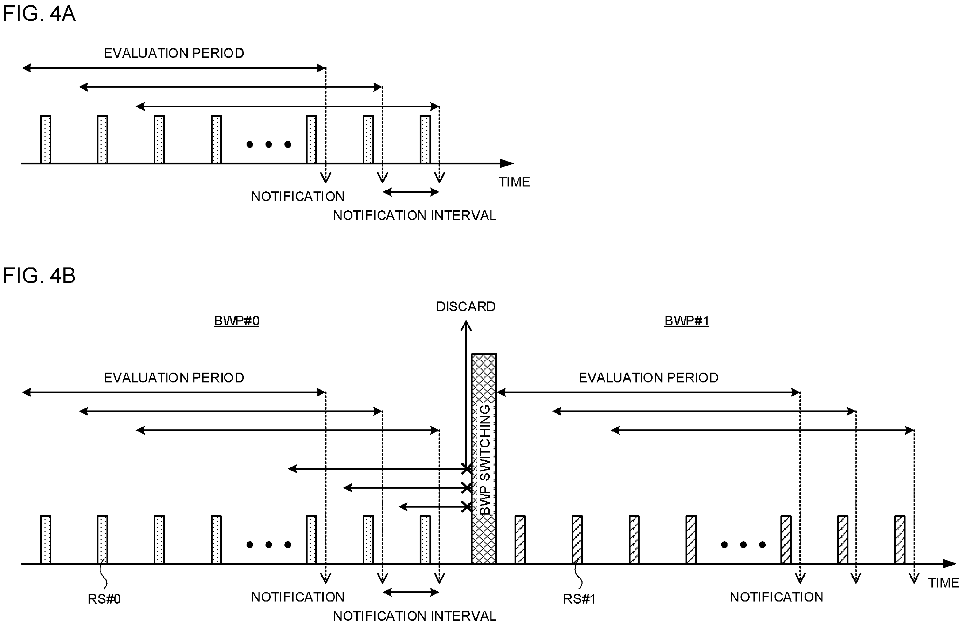

Fig. 4 shows an RLM/BFD operation before and after the BWP switching. Here, it is assumed that BWP #0 is switched to BWP #1.

In Fig. 4A, a given value is configured as an evaluation period of a given operation (for example, RLM/BFD operation) based on the RS, and the evaluation result is notified as necessary for each evaluation period. Notification of the evaluation result may be performed based on the notification interval (also referred to as indication interval). As the evaluation period, for example, the longer of 10 samples and a given time (for example, 200 ms) may be selected. Further, as the notification interval, the longer of the minimum cycle of the given operation and the given time (for example, 10 ms) may be selected. The evaluation period and notification interval configurations are not limited to this.

For example, when performing the RLM operation, the UE notifies IS/OSS based on RLM-RS. When performing the BFD operation, the UE notifies the beam failure instance from the lower layer to the higher layer (or transmits a beam recovery request (BFRQ) to the base station) when a BLF occurs based on BFD-RS.

When the BWP is switched based on the instruction (for example, DCI) from the base station or the timer, the UE does not notify or transmit, but discards the RLM/BFD evaluation whose evaluation period is in the middle in BWP #0 before switching (see Fig. 4B). Fig. 4B shows a case where the measurement operation in the middle of the evaluation period is reset in BWP #0 before switching when the BWP switching is performed.

When the BWP switching occurs, the UE starts the RLM/BFD operation (for example, RLM/BFD evaluation) by using the RS set configured for BWP #1 after switching. In this case, immediately after the switching, since the number of RS #1 received in BWP #1 (the number of evaluation samples) is small, a period during which the notification (for example, IS/OOS indication) is not performed may be configured.

The UE may stop or reset a given timer in the RLM/BFD operation during a period when the notification is not performed (for example, a given period after switching). The given timer may be, for example, at least one of the timer T310 and a timer T312 applied in the existing RLM operation. Of course, the given timer is not limited to this.

Alternatively, the UE may perform control to notify the evaluation result based on a relatively small number of RSs (number of evaluation samples) in the given period after switching. For example, in the given period after switching, the evaluation period may be configured to be shorter than that before switching.

Alternatively, the UE may configure the notification timing earlier with respect to the notification of the given information in the given period after switching. Further, the UE may configure a short notification interval with respect to the notification of given information in the given period after switching. For example, the UE may configure the notification interval of the IS notification to be shorter than that of the OOS notification to control the notification to be given earlier. As a result, delay can be suppressed even when the RLM/BFD operation is performed using different RSs after switching.

In this way, with the configuration in which the measurement result of the RS configured in the BWP before the BWP switching is not used for the RLM operation or the BFD operation in the BWP after the switching, the UE operation can be simplified. In addition, since the RLM/BFD operation can be performed using the same RS before and after the BWP switching, appropriate evaluation can be performed even when the RS received before and after the switching does not have quasi-co-location.

### (Second Aspect)

In the second aspect, the RS measurement result of the BWP before the switching is used for the RLM/BFD operation after the switching on the basis of the relationship between the RS configured in the BWP before the BWP switching and the RS configured in the BWP after the switching. The RS measurement result may be read as an RLM evaluation result, an RLM evaluation result, an RLM evaluation content, a BFD evaluation result, a BFD evaluation result, and a BFD evaluation content.

When performing the BWP switching, the UE controls the RLM/BFD operation depending on whether RS #0 corresponding to the BWP (for example, BWP #0) before the switching and RS #1 corresponding to the BWP (for example, BWP #1) after the switching fulfill the given relationship. The given relationship may be a quasi-co-location (e.g., QCL type D) relationship.

For example, if RS #0 and RS #1 do not have a quasi-co-location (e.g. QCL type D) relationship, the UE discards the RS #0 measurement result before the BWP switching and starts RLM/BFD evaluation after the BWP switching. Specifically, the UE performs the RLM/BFD evaluation based on RS #1 configured in BWP #1 after the switching.

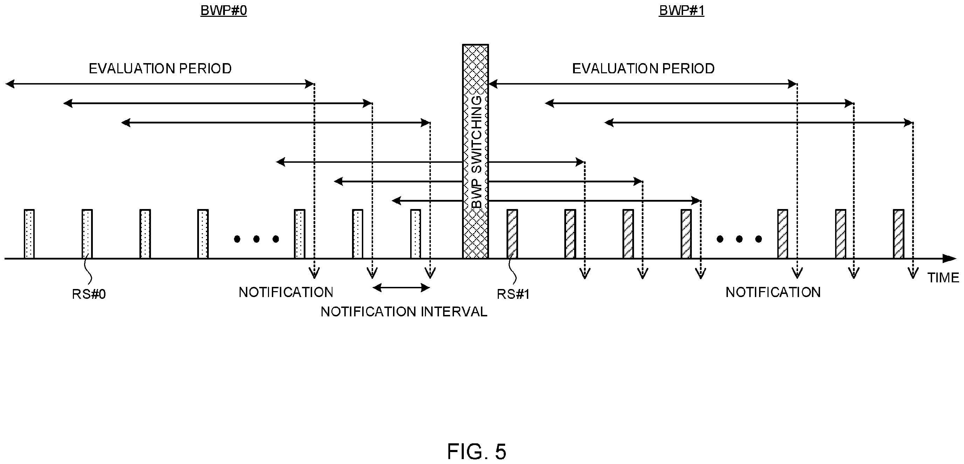

On the other hand, if RS #0 and RS #1 have a quasi-co-location (for example, QCL type D) relationship, the UE may use the RS #0 measurement result before the BWP switching to perform the RLM/BFD evaluation after the BWP switching (see Fig. 5). As an example, the UE performs the RLM/BFD evaluation using RS #0 configured in BWP #0 before the switching and RS #1 configured in BWP #1 after the switching. Note that RS #0 and RS #1 may be RSs that use the same RS resource.

Also, among the multiple RSs included in the RS set configured in BWP #0 and the multiple RSs included in the RS set configured in BWP #1, some RSs may fulfill a given relationship. In this case, only the measurement results of some RSs among the multiple RSs included in the RS set configured in BWP #0 fulfilling the given relationship may be applied to the RLM/BFD operation after the switching (for example, IS/OOS instruction or beam failure instance instruction).

The timing of the notification of the evaluation result using RS #0 configured in BWP #0 before the switching (for example, IS/OOS instruction or beam failure instance instruction) may match the notification timing of the evaluation result based on the RS (for example, the RS lacking the given relationship) configured in BWP #1 after the switching. In this case, the accuracy of the RLM/BFD evaluation can be improved by notifying the measurement results of RSs (for example, RS #0 and RS #1) that are in the given relationship together (increasing the number of samples).

Alternatively, the timing of the notification of the evaluation result using RS #0 configured in BWP #0 before the switching may be configured before the notification timing of the evaluation result based on RS #1 configured in BWP #1 after the switching. As a result, even if the evaluation result based on RS #1 cannot be notified immediately after the BWP switching, the evaluation based on RS #0 can be notified at an early stage.

Alternatively, the UE may configure the notification timing earlier with respect to the notification of the given information in the given period after switching. Further, alternatively, the UE may configure a short notification interval with respect to the notification of given information in the given period after switching.

For example, the UE may perform the notification timing (for example, of IS using RS #0) earlier than the notification timing of OOS. In addition, the UE may configure the notification interval of IS shorter than the notification interval of OOS to control the notification. As a result, the given evaluation result (for example, IS) can be notified at an early stage, so that the communication quality can be improved.

In this way, if the RSs applied before and after the BWP switching have the given relationship, when the evaluation result of the RS before the switching is applied to the RLM/BFD operation after the switching, then the accuracy of the RLM/BFD evaluation can be improved and the delay of the notification can be suppressed. As a result, degradation of communication quality can be suppressed.

### (Third Aspect)

In the third aspect, when a plurality of BWPs is configured in the UE, the RSs configured for BWPs are controlled so as to fulfill the given relationship. For example, the RS configured in the BWP before the BWP switching and the RS configured in the BWP after the switching are configured to fulfill the given relationship.

The RSs (or RS set) associated with each of the plurality of BWPs configured in the UE are configured to fulfill the given relationship. The given relationship may be a quasi-co-location (e.g., QCL type D) relationship. In the base station, among the multiple RSs included in the RS set configured in BWP #0 and the multiple RSs included in the RS set configured in BWP #1, at least some RSs are configured to fulfill the given relationship.

Alternatively, in the base station, among the multiple RSs included in the RS set configured in BWP #0 and the multiple RSs included in the RS set configured in BWP #1, all the RSs may be configured to fulfill the given relationship. The UE may perform the RLM/BFD operation on the assumption that the RSs corresponding to the plurality of configured BWPs fulfill the given relationship.

When the BWP switching occurs, the UE may use the measurement result of RS #0 before the BWP switching to perform the RLM/BFD evaluation after the BWP switching (see Fig. 5). As an example, the UE performs the RLM/BFD evaluation using RS #0 configured in BWP #0 before the switching and RS #1 configured in BWP #1 after the switching. Note that RS #0 and RS #1 may be RSs that use the same RS resource.

As a result, even when the BWP switching occurs, the RS measurement result received by BWP #0 before the switching can be used even after the switching, and the RLM/BFD evaluation can be performed with high accuracy.

Note that, when performing the RLM operation and the BFD operation, the UE may switch the reference signal (RLM-RS and BFD-RS) applied to each operation based on the instruction from the base station (for example, RRC signaling).

In this way, by configuring the RSs applied before and after the BWP switching to have the given relationship, the accuracy of the RLM/BFD evaluation can be improved and the delay of the notification can be suppressed. As a result, degradation of communication quality can be suppressed.

### (Radio Communication System)

Hereinafter, a structure of a radio communication system according to the embodiment of the present invention will be described. In this radio communication system, communication is performed using at least one of or a combination of the radio communication methods described in the embodiments described above.

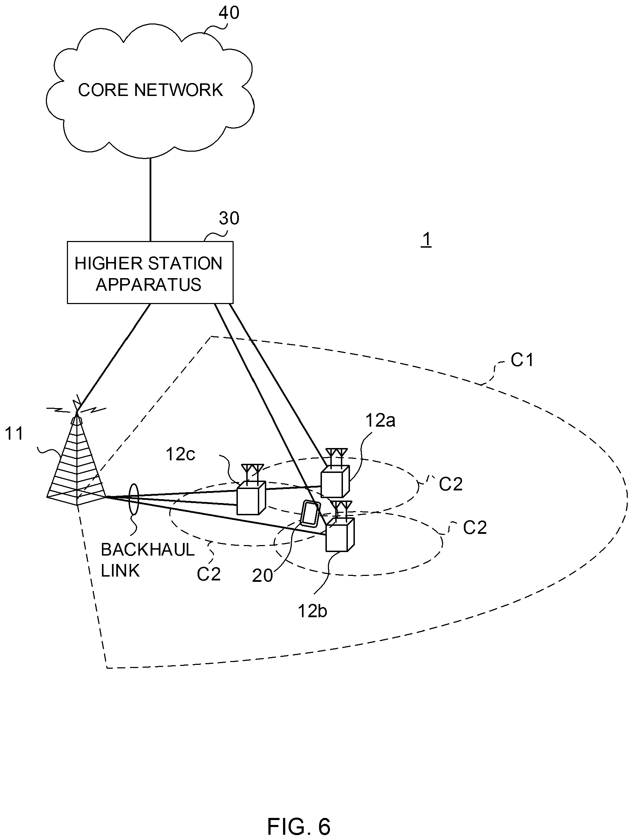

Fig. 6 is a diagram showing an example of a schematic configuration of a radio communication system according to one embodiment. A radio communication system 1 can adopt carrier aggregation (CA) and/or dual connectivity (DC) to group a plurality of fundamental frequency blocks (component carriers) into one, where the system bandwidth in an LTE system (for example, 20 MHz) constitutes one unit.

Note that the radio communication system 1 may be referred to as "LTE (Long Term Evolution)," "LTE-A (LTE-Advanced)," "LTE-B (LTE-Beyond)," "SUPER 3G," "IMT-Advanced," "4G (4th generation mobile communication system)," "5G (5th generation mobile communication system)," "NR (New Radio)," "FRA (Future Radio Access)," "New-RAT (Radio Access Technology)," and so on, or may be referred as a system to implement these.

Further, the radio communication system 1 may support dual connectivity (multi-RAT dual connectivity (MR-DC)) between a plurality of RATs (Radio Access Technology). The MR-DC may include dual connectivity between LTE and NR (EN-DC: E-UTRA-NR Dual Connectivity) in which the LTE (E-UTRA) base station (eNB) becomes the master node (MN) and the NR base station (gNB) becomes the secondary node (SN), and dual connectivity between NR and LTE (NE-DC: NR-E-UTRA Dual Connectivity) in which the NR base station (gNB) becomes the MN and the LTE (E-UTRA) base station (eNB) becomes the SN, and so on.

The radio communication system 1 includes a base station 11 that forms a macro cell C1 of a relatively wide coverage, and base stations 12 (12a to 12c) that form small cells C2, which are placed within the macro cell C1 and which are narrower than the macro cell C1. Also, user terminals 20 are placed in the macro cell C1 and in each small cell C2. The arrangement, the number, and the like of each cells and user terminals 20 are by no means limited to an aspect shown in the drawings.

The user terminal 20 can connect with both the base station 11 and the base stations 12. It is assumed that the user terminals 20 use the macro cell C1 and the small cells C2 at the same time by means of CA or DC. Furthermore, the user terminals 20 may apply CA or DC by using a plurality of cells (CCs) (for example, five or fewer CCs or six or more CCs).

Between the user terminal 20 and the base station 11, communication can be carried out by using a carrier of a relatively low frequency band (for example, 2 GHz) and a narrow bandwidth (referred to as an "existing carrier," a "legacy carrier" and so on). Meanwhile, between the user terminal 20 and the base stations 12, a carrier of a relatively high frequency band (for example, 3.5 GHz, 5 GHz and so on) and a wide bandwidth may be used, or the same carrier as that used between the user terminals 20 and the radio base station 11 may be used. Note that the structure of the frequency band for use in each base station is by no means limited to these.

Moreover, the user terminal 20 can perform communication in each cell by means of time division duplex (TDD) and/or frequency division duplex (FDD). Further, in each cell (carrier), a single numerology may be applied, or a plurality of different numerologies may be applied.

The numerology may be a communication parameter applied to transmission and/or reception of a signal and/or channel, and may indicate, for example, at least one of subcarrier spacing, bandwidth, symbol length, cyclic prefix length, subframe length, TTI length, number of symbols per TTI, radio frame configuration, specific filtering processing performed by a transceiver in a frequency domain, specific windowing processing performed by a transceiver in a time domain, and so on.

For example, for a certain physical channel, when the subcarrier spacing differs and/or the numbers of OFDM symbols are different between the constituent OFDM symbols, this case may be described that they are different in numerology.

A wired connection (for example, an optical fiber in compliance with the CPRI (Common Public Radio Interface), an X2 interface and so on) or a wireless connection may be established between the radio base station 11 and the radio base stations 12 (or between two radio base stations 12).

The base station 11 and the base stations 12 are each connected with higher station apparatus 30, and are connected with a core network 40 via the higher station apparatus 30. Note that the higher station apparatus 30 may be, for example, access gateway apparatus, a radio network controller (RNC), a mobility management entity (MME) and so on, but is by no means limited to these. Also, each base station 12 may be connected with the higher station apparatus 30 via the base station 11.

Note that the base station 11 is a base station having a relatively wide coverage, and may be referred to as a "macro base station," an "aggregate node," an "eNB (eNodeB)," a "transmission/reception point" and so on. Also, the base stations 12 are base stations having local coverages, and may be referred to as "small base stations," "micro base stations," "pico base stations," "femto base stations," "HeNBs (Home eNodeBs)," "RRHs (Remote Radio Heads)," "transmission/reception points" and so on. Hereinafter the base stations 11 and 12 will be collectively referred to as "base stations 10," unless specified otherwise.

Each of the user terminals 20 is a terminal that supports various communication schemes such as LTE, LTE-A and so on, and may include not only mobile communication terminals (mobile stations) but stationary communication terminals (fixed stations).

In the radio communication system 1, as radio access schemes, orthogonal frequency division multiple access (OFDMA) is applied to the downlink, and single-carrier frequency division multiple access (SC-FDMA) and/or OFDMA are applied to the uplink.

OFDMA is a multi-carrier transmission scheme to perform communication by dividing a frequency band into a plurality of narrow frequency bands (subcarriers) and mapping data to each subcarrier. SC-FDMA is a single-carrier transmission scheme to mitigate interference between terminals by dividing the system bandwidth into bands formed with one or continuous resource blocks per terminal, and allowing a plurality of terminals to use mutually different bands. Note that the uplink and downlink radio access schemes are by no means limited to the combinations of these, and other radio access schemes may be used.

In the radio communication system 1, a downlink shared channel (PDSCH (Physical Downlink Shared Channel)), which is used by each user terminal 20 on a shared basis, a broadcast channel (Physical Broadcast Channel (PBCH)), downlink L1/L2 control channels, and so on are used as downlink channels. User data, higher layer control information and SIBs (System Information Blocks) and so on are transmitted on the PDSCH. Further, a master information block (MIB) is transmitted on the PBCH.

The downlink L1/L2 control channels include at least one of a downlink control channel (PDCCH (Physical Downlink Control CHannel) and/or an EPDCCH (Enhanced Physical Downlink Control CHannel)), a PCFICH (Physical Control Format Indicator CHannel), and a PHICH (Physical Hybrid-ARQ Indicator CHannel). Downlink control information (DCI), including PDSCH and/or PUSCH scheduling information, and so on are communicated on the PDCCH.

Note that scheduling information may be notified by the DCI. For example, the DCI scheduling DL data reception may be referred to as "DL assignment," and the DCI scheduling UL data transmission may be referred to as "UL grant."

The number of OFDM symbols to use for the PDCCH is transmitted on the PCFICH. HARQ (Hybrid Automatic Repeat reQuest) delivery acknowledgement information (also referred to as, for example, "retransmission control information," "HARQ-ACKs," "ACK/NACKs," etc.) in response to the PUSCH is transmitted on the PHICH. The EPDCCH is frequency-division-multiplexed with the PDSCH (downlink shared data channel) and used to for transmission of the DCI and so on, like the PDCCH.

In the radio communication system 1, an uplink shared channel (PUSCH (Physical Uplink Shared Channel)), which is used by each user terminal 20 on a shared basis, an uplink control channel (PUCCH (Physical Uplink Control Channel)), a random access channel (PRACH (Physical Random Access Channel)), and so on are used as uplink channels. User data, higher layer control information and so on are transmitted on the PUSCH. In addition, radio link quality information (CQI (Channel Quality Indicator)) of the downlink, transmission confirmation information, scheduling request (SR), and so on are transmitted on the PUCCH. By means of the PRACH, random access preambles for establishing connections with cells are transmitted.

In the radio communication systems 1, cell-specific reference signal (CRSs), channel state information reference signal (CSI-RSs), demodulation reference signal (DMRSs), positioning reference signal (PRSs) and so on are transmitted as downlink reference signals. Also, in the radio communication system 1, measurement reference signals (SRSs (Sounding Reference Signals)), demodulation reference signals (DMRSs) and so on are transmitted as uplink reference signals. Note that, DMRSs may be referred to as "user terminal-specific reference signals (UE-specific Reference Signals)." Also, the reference signals to be transmitted are by no means limited to these.

### <Base Station>

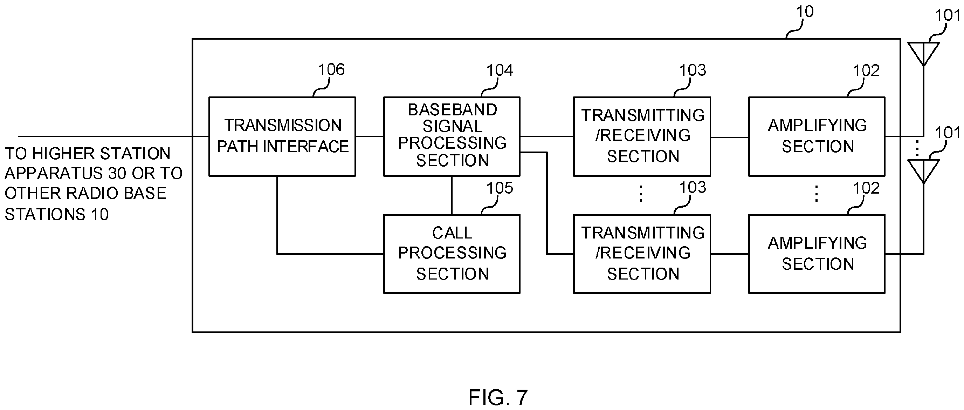

Fig. 7 is a diagram showing an example of an overall configuration of a base station according to one embodiment. A base station 10 includes a plurality of transmitting/receiving antennas 101, amplifying sections 102, transmitting/receiving sections 103, a baseband signal processing section 104, a call processing section 105 and a transmission path interface 106. Note that the base station 10 may be configured to include one or more transmitting/receiving antennas 101, one or more amplifying sections 102 and one or more transmitting/receiving sections 103.

User data to be transmitted from the base station 10 to the user terminal 20 on the downlink is input from the higher station apparatus 30 to the baseband signal processing section 104, via the transmission path interface 106.

In the baseband signal processing section 104, the user data is subjected to transmission processes, such as a PDCP (Packet Data Convergence Protocol) layer process, division and coupling of the user data, RLC (Radio Link Control) layer transmission processes such as RLC retransmission control, MAC (Medium Access Control) retransmission control (for example, an HARQ transmission process), scheduling, transport format selection, channel coding, an inverse fast Fourier transform (IFFT) process, and a precoding process, and the result is forwarded to each transmitting/receiving section 103. Furthermore, downlink control signals are also subjected to transmission processing such as channel coding and an inverse fast Fourier transform, and the result is forwarded to each transmitting/receiving sections 103.

The transmitting/receiving sections 103 convert baseband signals that are pre-coded and output from the baseband signal processing section 104 on a per antenna basis, to have radio frequency bands and transmit the result. The radio frequency signals having been subjected to frequency conversion in the transmitting/receiving sections 103 are amplified in the amplifying sections 102, and transmitted from the transmitting/receiving antennas 101. Each transmitting/receiving section 103 can be configured by transmitter/receiver, transmitting/receiving circuit or transmitting/receiving apparatus that can be described based on general understanding of the technical field to which the present disclosure pertains. Note that each transmitting/receiving section 103 may be structured as a transmitting/receiving section in one entity, or may be configured by a transmitting section and a receiving section.

Meanwhile, as for uplink signals, radio frequency signals that are received in the transmitting/receiving antennas 101 are amplified in the amplifying sections 102. The transmitting/receiving sections 103 receive the uplink signals amplified in the amplifying sections 102. The transmitting/receiving sections 103 convert the received signals into the baseband signal through frequency conversion and outputs to the baseband signal processing section 104.

In the baseband signal processing section 104, user data that is included in the uplink signals that are input is subjected to fast Fourier transform (FFT) processing, inverse discrete Fourier transform (IDFT) processing, error correction decoding, MAC retransmission control receiving processing, and RLC layer and PDCP layer receiving processing, and forwarded to the higher station apparatus 30 via the transmission path interface 106. The call processing section 105 performs call processing (setting up, releasing and so on) for communication channels, manages the state of the base stations 10, manages the radio resources.

The transmission path interface 106 transmits and receives signals to and from the higher station apparatus 30 via a certain interface. Also, the transmission path interface 106 may transmit and receive signals (backhaul signaling) with other base stations 10 via an inter-base station interface (for example, optical fiber in compliance with the CPRI (Common Public Radio Interface), the X2 interface, etc.).

Note that the transmitting/receiving section 103 may further include an analog beamforming section that performs analog beamforming. The analog beamforming section can be configured by an analog beamforming circuit (for example, a phase shifter, a phase shift circuit) or analog beamforming apparatus (e.g., a phase shift apparatus) that can be described based on general understanding of the technical field to which the present disclosure pertains. Also, the transmitting/receiving antenna 101 can be configured by an array antenna, for example. Also, the transmitting/receiving section 103 may be configured such that that single BF, multi BF and so on can be used.

The transmitting/receiving section 103 may transmit a signal using a transmission beam and may receive a signal using a reception beam. The transmitting/receiving section 103 may transmit and/or receive a signal using a given beam determined by the control section 301.

The transmitting/receiving section 103 may receive and/or transmit various types of information described in the above-described embodiments from/to the user terminal 20. For example, the transmitting/receiving section 103 transmits a reference signal (for example, RLM-RS or BFD-RS) configured for each BWP in a given bandwidth part (BWP).

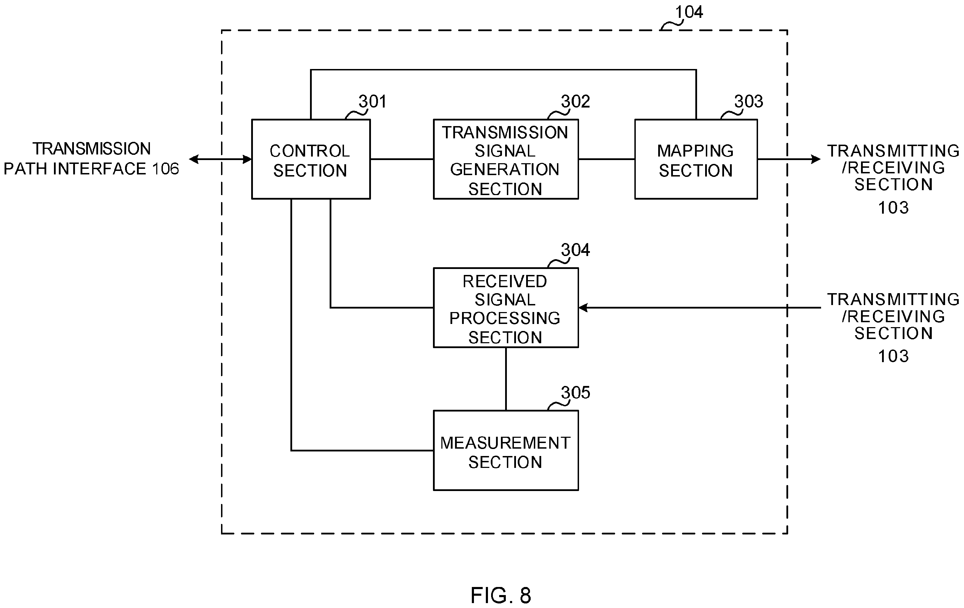

Fig. 8 is a diagram showing an example of a functional configuration of the base station according to one embodiment. Note that, the present example primarily shows functional blocks that pertain to characteristic parts of the present embodiment, it may be assumed that the base station 10 includes other functional blocks that are necessary for radio communication as well.

The baseband signal processing section 104 at least includes a control section (scheduler) 301, a transmission signal generation section 302, a mapping section 303, a received signal processing section 304 and a measurement section 305. Note that these structures may be included in the base station 10, and some or all of the structures do not need to be included in the baseband signal processing section 104.

The control section (scheduler) 301 controls the whole of the base station 10. The control section 301 can be configured by a controller, a control circuit or control apparatus that can be described based on general understanding of the technical field to which the present disclosure pertains.

For example, the control section 301 controls the generation of signals in the transmission signal generation section 302, the allocation of signals in the mapping section 303, and the like. Furthermore, the control section 301 controls the signal receiving processing in the received signal processing section 304, the measurements of signals in the measurement section 305, and so on.

The control section 301 controls the scheduling (for example, resource allocation) of system information, downlink data signals (for example, signals transmitted in the PDSCH), and downlink control signals (for example, signals that are transmitted in the PDCCH and/or the EPDCCH, such as delivery acknowledgement information). The control section 301 controls the generation of downlink control signals, downlink data signals, and the like based on results of determining whether or not retransmission control is necessary for uplink data signals, and the like.

The control section 301 controls scheduling of the synchronization signal (for example, PSS/SSS), the downlink reference signal (for example, CRS, CSI-RS, DMRS), and so on.

The control section 301 may use digital BF (for example, precoding) by the baseband signal processing section 104 and/or analog BF (for example, phase rotation) by the transmitting/receiving section 103 to perform control of forming the transmission beam and/or the reception beam.

The transmission signal generation section 302 generates downlink signals (downlink control signals, downlink data signals, downlink reference signals and so on) based on instructions from the control section 301, and outputs these signals to the mapping section 303. The transmission signal generation section 302 can be configured by a signal generator, a signal generating circuit or signal generation apparatus that can be described based on general understanding of the technical field to which the present disclosure pertains.

For example, the transmission signal generation section 302 generates DL assignment to notify downlink data allocation information, and/or UL grant to notify uplink data allocation information, based on instructions from the control section 301. The DL assignments and the UL grants are both DCI, and follow the DCI format. Further, for a downlink data signal, encoding processing and modulation processing are performed in accordance with a coding rates modulation scheme or the like determined based on channel state information (CSI) and so on from each user terminal 20.

The mapping section 303 maps the downlink signals generated in the transmission signal generation section 302 to certain radio resources, based on instructions from the control section 301 and outputs these to the transmitting/receiving sections 103. The mapping section 303 can be configured by a mapper, a mapping circuit or mapping apparatus that can be described based on general understanding of the technical field to which the present disclosure pertains.

The received signal processing section 304 performs receiving processing (for example, demapping, demodulation, decoding and so on) of received signals that are input from the transmitting/receiving sections 103. Here, the received signals include, for example, uplink signals transmitted from the user terminals 20 (uplink control signals, uplink data signals, uplink reference signals, and so on). The received signal processing section 304 can be configured by a signal processor, a signal processing circuit or signal processing apparatus that can be described based on general understanding of the technical field to which the present disclosure pertains.

The received signal processing section 304 outputs, to the control section 301, information decoded by the receiving processing. For example, if the received signal processing section 304 receives the PUCCH including HARQ-ACK, the received signal processing section 304 outputs the HARQ-ACK to the control section 301. Also, the received signal processing section 304 outputs the received signals and/or the signals after the receiving processing to the measurement section 305.

The measurement section 305 conducts measurements with respect to the received signals. The measurement section 305 can be configured by a measurer, a measurement circuit or measurement apparatus that can be described based on general understanding of the technical field to which the present disclosure pertains.

For example, the measurement section 305 may perform RRM (Radio Resource Management) measurements, CSI (Channel State Information) measurements and so on, based on the received signals. The measurement section 305 may measure the received power (for example, RSRP (Reference Signal Received Power)), the received quality (for example, RSRQ (Reference Signal Received Quality), SINR (Signal to Interference plus Noise Ratio), SNR (Signal to Noise Ratio), etc.), the signal strength (for example, RSSI (Received Signal Strength Indicator)), transmission path information (for example, CSI), and so on. The measurement results may be output to the control section 301.

### <User terminal>

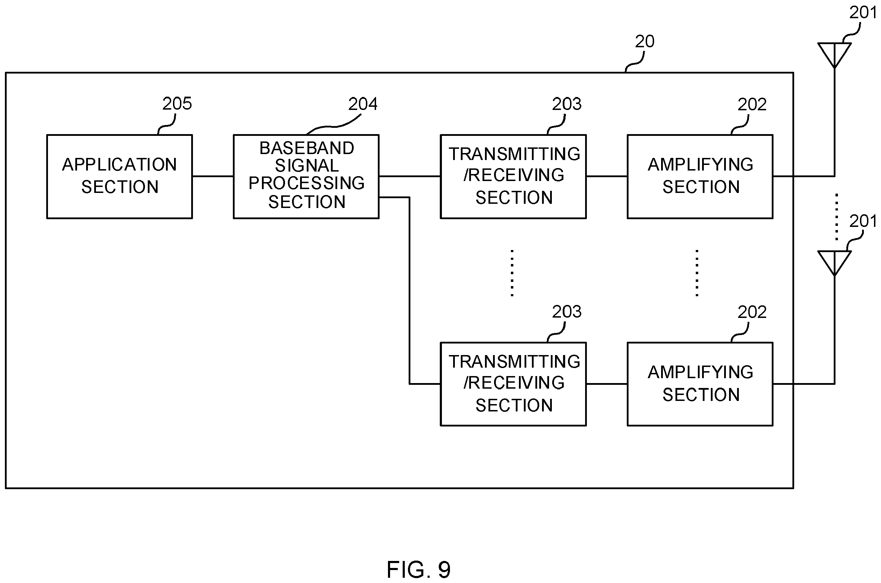

Fig. 9 is a diagram showing an example of an overall configuration of the user terminal according to one embodiment. A user terminal 20 includes a plurality of transmitting/receiving antennas 201, amplifying sections 202, transmitting/receiving sections 203, a baseband signal processing section 204 and an application section 205. Note that the user terminal 20 may be configured to include one or more transmitting/receiving antennas 201, one or more amplifying sections 202 and one or more transmitting/receiving sections 203.

Radio frequency signals that are received in the transmitting/receiving antennas 201 are amplified in the amplifying sections 202. The transmitting/receiving sections 203 receive the downlink signals amplified in the amplifying sections 202. The transmitting/receiving sections 203 convert the received signals into baseband signals through frequency conversion, and output the baseband signals to the baseband signal processing section 204. Each transmitting/receiving section 203 can be configured by transmitter/receiver, transmitting/receiving circuit or transmitting/receiving apparatus that can be described based on general understanding of the technical field to which the present disclosure pertains. Note that each transmitting/receiving section 203 may be structured as a transmitting/receiving section in one entity, or may be configured by a transmitting section and a receiving section.

The baseband signal processing section 204 performs, on each input baseband signal, an FFT process, error correction decoding, a retransmission control receiving process, and so on. The downlink user data is forwarded to the application section 205. The application section 205 performs processing related to higher layers above the physical layer and the MAC layer, and so on. Also, in the downlink data, the broadcast information may be also forwarded to the application section 205.

Meanwhile, the uplink user data is input from the application section 205 to the baseband signal processing section 204. The baseband signal processing section 204 performs retransmission control transmission processing (for example, HARQ transmission processing), channel coding, precoding, discrete Fourier transform (DFT) processing, IFFT processing and so on, and the result is forwarded to the transmitting/receiving section 203.

The transmitting/receiving sections 203 convert the baseband signals output from the baseband signal processing section 204 to have radio frequency band and transmit the result. The radio frequency signals having been subjected to frequency conversion in the transmitting/receiving sections 203 are amplified in the amplifying sections 202, and transmitted from the transmitting/receiving antennas 201.

Note that the transmitting/receiving section 203 may further include an analog beamforming section that performs analog beamforming. The analog beamforming section can be configured by an analog beamforming circuit (for example, a phase shifter, a phase shift circuit) or analog beamforming apparatus (e.g., a phase shifter) that can be described based on general understanding of the technical field to which the present disclosure pertains. Also, the transmitting/receiving antenna 201 can be configured by an array antenna, for example. Also, the transmitting/receiving section 203 may be configured such that that single BF, multi BF and so on can be used.

The transmitting/receiving section 203 may receive a reference signal configured for each BWP in a given bandwidth part (BWP). Further, the transmitting/receiving section 203 may receive a reference signal (BFD-RS) for detecting a beam failure or a reference signal (RLM-RS) for detecting a radio link failure.

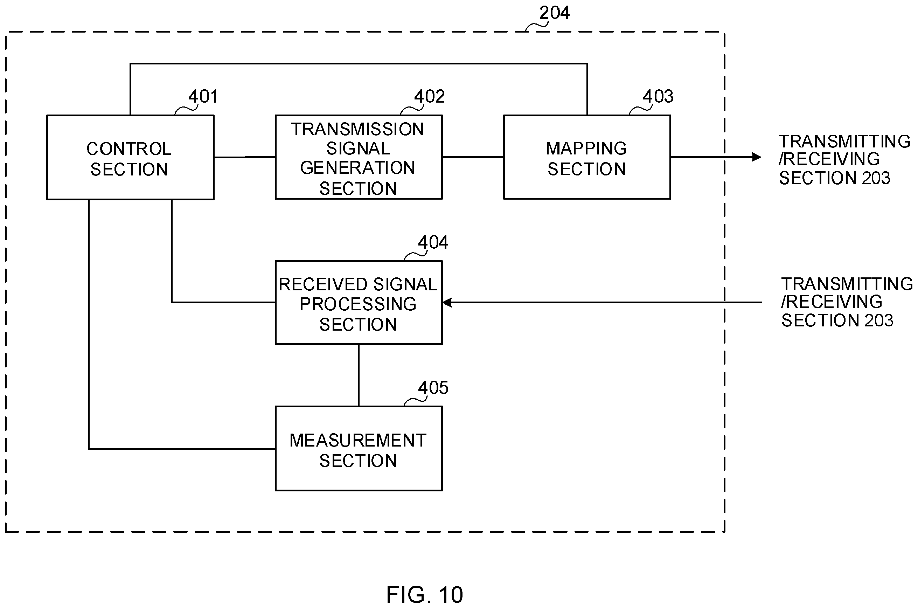

Fig. 10 is a diagram showing an example of a functional configuration of the user terminal according to one embodiment. Note that, the present example primarily shows functional blocks that pertain to characteristic parts of the present embodiment, it may be assumed that the user terminal 20 includes other functional blocks that are necessary for radio communication as well.

The baseband signal processing section 204 provided in the user terminal 20 at least includes a control section 401, a transmission signal generation section 402, a mapping section 403, a received signal processing section 404 and a measurement section 405. Note that these structures may be included in the user terminal 20, and some or all of the structures do not need to be included in the baseband signal processing section 204.

The control section 401 controls the whole of the user terminal 20. The control section 401 can be configured by a controller, a control circuit or control apparatus that can be described based on general understanding of the technical field to which the present disclosure pertains.

The control section 401, for example, controls the generation of signals in the transmission signal generation section 402, the allocation of signals in the mapping section 403, and so on. Furthermore, the control section 401 controls the signal receiving processing in the received signal processing section 404, the measurements of signals in the measurement section 405 and so on.

The control section 401 acquires the downlink control signals and the downlink data signals transmitted from the base station 10, from the received signal processing section 404. The control section 401 controls the generation of uplink control signals and/or uplink data signals based on the results of determining necessity or not of retransmission control is necessary to the downlink control signals and/or downlink data signals, and so on.

The control section 401 may use digital BF (for example, precoding) by the baseband signal processing section 204 and/or analog BF (for example, phase rotation) by the transmitting/receiving sections 203 to perform control of forming a transmission beam and/or a reception beam.

Further, when switching from a given BWP to another BWP occurs, the control section 401 may perform control not to use the reference signal of the given BWP for at least one of the radio link monitor operation and the beam failure detection operation in the other BWP. Alternatively, the control section 401 may perform control regarding the presence or absence of use of the reference signal of a given BWP based on the relationship between reference signals configured for the given BWP and the other BWP for at least one of the radio link monitor operation and the beam failure detection operation in the other BWP.

For example, the control section 401 may discard the measurement result based on the reference signal configured for the given BWP and perform evaluation (or measurement) based on the reference signal configured for the other BWP for at least one of the radio link monitor operation and the beam failure detection operation in the other BWP.

Alternatively, if there is a given quasi-co-location (for example, QCL type D) relationship between a first reference signal configured in the given BWP and a second reference signal configured in the other BWP, the control section 401 may use the measurement result based on the first reference signal for at least one of the radio link monitor operation and the beam failure detection operation in the other BWP.

Further, if there is no given quasi-co-location relationship between the first reference signal configured in the given BWP and the second reference signal configured in the other BWP, the control section 401 may perform control not to use the measurement result based on the first reference signal for at least one of the radio link monitor operation and the beam failure detection operation in the other BWP.

Further, the control section 401 may perform the RLM/BFD operation assuming that the first reference signal configured in the given BWP and the second reference signal configured in the other BWP are configured to have a given quasi-co-location relationship.

The control section 401 may control radio link monitoring (RLM) and/or beam failure recovery (BFR) based on the measurement result of the measurement section 405.

The transmission signal generation section 402 generates uplink signals (uplink control signals, uplink data signals, uplink reference signals and so on) based on instructions from the control section 401, and outputs the uplink signals to the mapping section 403. The transmission signal generation section 402 can be configured by a signal generator, a signal generating circuit or signal generation apparatus that can be described based on general understanding of the technical field to which the present disclosure pertains.

For example, the transmission signal generation section 402 generates uplink control signals related to delivery acknowledgement information, channel state information (CSI) and so on, based on instructions from the control section 401. Also, the transmission signal generation section 402 generates uplink data signals based on instructions from the control section 401. For example, when a UL grant is included in a downlink control signal that is notified from the base station 10, the control section 401 instructs the transmission signal generation section 402 to generate an uplink data signal.

The mapping section 403 maps the uplink signals generated in the transmission signal generation section 402 to radio resources based on instructions from the control section 401, and output the result to the transmitting/receiving section 203. The mapping section 403 can be configured by a mapper, a mapping circuit or mapping apparatus that can be described based on general understanding of the technical field to which the present disclosure pertains.

The received signal processing section 404 performs receiving processing (for example, demapping, demodulation, decoding and so on) of received signals that are input from the transmitting/receiving sections 203. Here, the received signals include, for example, downlink signals (downlink control signals, downlink data signals, downlink reference signals and so on) that are transmitted from the base station 10. The received signal processing section 404 can be configured by a signal processor, a signal processing circuit or signal processing apparatus that can be described based on general understanding of the technical field to which the present disclosure pertains. Also, the received signal processing section 404 can constitute the receiving section according to the present disclosure.

The received signal processing section 404 outputs the information decoded through the receiving processing to the control section 401. The received signal processing section 404 outputs, for example, broadcast information, system information, RRC signaling, DCI and so on, to the control section 401. Also, the received signal processing section 404 outputs the received signals and/or the signals after the receiving processing to the measurement section 405.

The measurement section 405 conducts measurements with respect to the received signals. The measurement section 405 can be configured by a measurer, a measurement circuit or measurement apparatus that can be described based on general understanding of the technical field to which the present disclosure pertains.

For example, the measurement section 405 may perform RRM measurements, CSI measurements and so on based on the received signals. The measurement section 405 may measure the received power (for example, RSRP), the received quality (for example, RSRQ, SINR, SNR, etc.), the signal strength (for example, RSSI), propagation path information (for example, CSI), and so on. The measurement results may be output to the control section 401. The transmitting/receiving section 203 may transmit BFRQ, PBFRQ and so on to the base station 10.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatuses (via wire, wireless, or the like, for example) and using these pluralities of pieces of apparatuses. The functional block may be realized by combining the one device or the plurality of devices with software.

Here, the functions include, but are not limited to, judging, determination, decision, calculation, computation, processing, derivation, investigation, search, confirmation, reception, transmission, output, access, solution, selection, choosing, establishment, comparison, assumption, expectation, and deeming, broadcasting, notifying, communicating, forwarding, configuring, reconfiguring, allocating, mapping, and assigning. For example, a functional block (configuration unit/section) that causes transmission to function may be referred to as a transmitting unit/section, a transmitter, or the like. In any case, as described above, the method for implementation is not particularly limited.

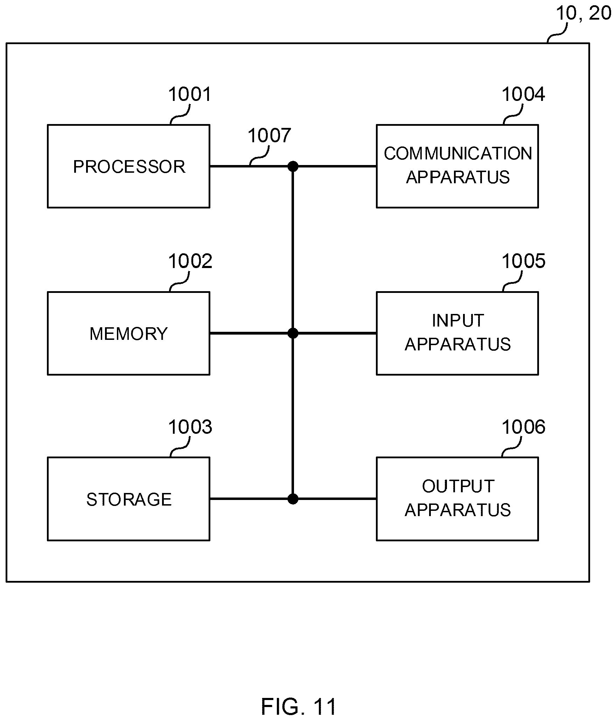

For example, the base station, the user terminal, and so on according to one embodiment of the present disclosure may function as a computer that executes the processing of the radio communication method of the present disclosure. Fig. 11 is a diagram showing an example of a hardware structure of the base station and the user terminal according to one embodiment. Physically, the above-described base station 10 and user terminal 20 may each be formed as computer apparatus that includes a processor 1001, a memory 1002, a storage 1003, a communication apparatus 1004, an input apparatus 1005, an output apparatus 1006 and a bus 1007, and so on.

Note that, in the following description, the word "apparatus" may be replaced by "circuit," "device," "unit" and so on. The hardware structure of the base station 10 and the user terminal 20 may be designed to include one or a plurality of apparatus shown in the drawings, or may be designed not to include part of pieces of apparatus.

For example, although only one processor 1001 is shown, a plurality of processors may be provided. Furthermore, processing may be implemented with one processor, or processing may be implemented at the same time, or in different manners, with two or more processors. Note that the processor 1001 may be implemented with one or more chips.

Each function of the base station 10 and the user terminal 20 is implemented by allowing certain software (programs) to be read on hardware such as the processor 1001 and the memory 1002, and allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured by a central processing unit (CPU), which includes interfaces with peripheral equipment, control apparatus, computing apparatus, register and so on. For example, the above-described baseband signal processing section 104 (204), call processing section 105 and so on may be implemented by the processor 1001.

Furthermore, the processor 1001 reads programs (program codes), software modules, data, and so on from at least one of the storage 1003 and the communication apparatus 1004, into the memory 1002, and executes various processing according to these. As for the programs, programs to allow computers to execute at least part of the operations of the above-described embodiments are used. For example, the control section 401 of the user terminal 20 may be implemented by control programs that are stored in the memory 1002 and that operate on the processor 1001, and other functional blocks may be implemented likewise.

The memory 1002 is a computer-readable recording medium, and may be formed by, for example, at least one of a ROM (Read Only Memory), an EPROM (Erasable Programmable ROM), an EEPROM (Electrically EPROM), a RAM (Random Access Memory) and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be formed by, for example, at least one of a flexible disk, a floppy (registered trademark) disk, a magneto-optical disk (for example, a compact disc (CD-ROM (Compact Disc ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for performing inter-computer communication via at least one of a wired network and a wireless network, and for example, is referred to as "network device", "network controller", "network card", "communication module", and the like. The communication apparatus 1004 may be configured to include a high frequency switch, a duplexer, a filter, a frequency synthesizer and so on in order to implement, for example, at least one of frequency division duplex (FDD) and time division duplex (TDD). For example, the above-described transmitting/receiving antennas 101 (201), amplifying sections 102 (202), transmitting/receiving sections 103 (203), transmission path interface 106 and so on may be implemented by the communication apparatus 1004. The transmitting/receiving section 103 may be implemented by physically or logically separating a transmitting section 103a and a receiving section 103b.

The input apparatus 1005 is an input device that receives input from the outside (for example, a keyboard, a mouse, a microphone, a switch, a button, a sensor and so on). The output apparatus 1006 is an output device that allows sending output to the outside (for example, a display, a speaker, an LED (Light Emitting Diode) lamp and so on). Note that the input apparatus 1005 and the output apparatus 1006 may be provided in an integrated structure (for example, a touch panel).

Furthermore, these types of apparatus including the processor 1001, the memory 1002, and others are connected by a bus 1007 for communicating information. The bus 1007 may be formed with a single bus, or may be formed with buses that vary between pieces of apparatus.

Also, the base station 10 and the user terminal 20 may be structured to include hardware such as a microprocessor, a digital signal processor (DSP), an ASIC (Application-Specific Integrated Circuit), a PLD (Programmable Logic Device), an FPGA (Field Programmable Gate Array) and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, at least one of "channels" and "symbols" may be replaced by "signals" ("signaling"). Also, "signals" may be "messages." A reference signal may be abbreviated as an "RS," and may be referred to as a "pilot," a "pilot signal" and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted by one or a plurality of slots in the time domain. A subframe may be a fixed time duration (for example, 1 ms) independent of numerology.

Here, numerology may be a communication parameter applied to at least one of transmission and reception of a certain signal or channel. For example, the numerology may indicate at least one of a subcarrier spacing (SCS), a bandwidth, a symbol length, a cyclic prefix length, a transmission time interval (TTI), the number of symbols per TTI, a radio frame configuration, specific filtering processing performed by a transceiver in the frequency domain, specific windowing processing performed by the transceiver in the time domain and so on.

A slot may be constituted of one or a plurality of symbols in the time domain (OFDM (Orthogonal Frequency Division Multiplexing) symbols, SC-FDMA (Single Carrier Frequency Division Multiple Access) symbols, and so on). Also, a slot may be a time unit based on numerology.

A slot may include a plurality of mini-slots. Each mini-slot may be constituted of one or a plurality of symbols in the time domain. Also, a mini-slot may be referred to as a "sub-slot." Each mini-slot may be constituted of symbols less than the number of slots. A PDSCH (or PUSCH) transmitted in a time unit larger than a mini-slot may be referred to as PDSCH (PUSCH) mapping type A. A PDSCH (or PUSCH) transmitted using a mini-slot may be referred to as "PDSCH (PUSCH) mapping type B."

A radio frame, a subframe, a slot, a mini-slot and a symbol all represent the time unit in signal transmission. A radio frame, a subframe, a slot, a mini-slot and a symbol may each be called by other applicable terms. Note that time units such as a frame, a subframe, a slot, a mini-slot, and a symbol in the present disclosure may be interchangeably interpreted.

For example, one subframe may be referred to as a "transmission time interval (TTI)," or a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period of time than 1 ms. Note that a unit to represent a TTI may be referred to as a "slot," a "mini-slot" and so on, instead of a "subframe."

Here, a TTI refers to the minimum time unit of scheduling in radio communication, for example. For example, in LTE systems, a radio base station schedules the allocation of radio resources (such as a frequency bandwidth and transmission power that are available for each user terminal) for the user terminals in TTI units. Note that the definition of TTIs is not limited to this.

The TTI may be the transmission time unit of channel-encoded data packets (transport blocks), code blocks, codewords and so on, or may be the unit of processing in scheduling, link adaptation and so on. Note that when TTI is given, a time interval (for example, the number of symbols) to which the transport blocks, the code blocks, the codewords, and so on are actually mapped may be shorter than TTI.

Note that, in the case where one slot or one mini-slot is referred to as a "TTI," one or more TTIs (that is, one or more slots or one or more mini-slots) may be the minimum time unit of scheduling. Also, the number of slots (the number of mini-slots) constituting the minimum time unit of the scheduling may be controlled.

A TTI having a time length of 1 ms may be referred to as a usual TTI (TTI in LTE Rel. 8 to 12), a normal TTI, a long TTI, a usual subframe, a normal subframe, a long subframe, a slot, or the like. A TTI that is shorter than a usual TTI may be referred to as "shortened TTI", "short TTI", "partial TTI" (or "fractional TTI"), "shortened subframe", "short subframe", "mini-slot", "sub-slot", "slot", or the like.

Note that a long TTI (for example, a normal TTI, a subframe and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and may be 12, for example. The number of subcarriers included in an RB may be determined based on numerology.

Also, an RB may include one or a plurality of symbols in the time domain, and may be one slot, one mini-slot, one subframe or one TTI in length. One TTI, one subframe, and so on each may be constituted of one or a plurality of resource blocks.

Note that one or a plurality of RBs may be referred to as a "physical resource block (PRB (Physical RB))," a "subcarrier group (SCG)," a "resource element group (REG)," a "PRB pair," an "RB pair" and so on.

Furthermore, a resource block may be constituted of one or a plurality of resource elements (REs). For example, one RE may be a radio resource field of one subcarrier and one symbol.

The bandwidth part (BWP) (which may be referred to as a partial bandwidth and so on) may represent a subset of contiguous common RBs (common resource blocks) for certain numerology in a certain carrier. Here, the common RB may be specified by an index of RBs based on a common reference point of the carrier. A PRB may be defined in a certain BWP and be numbered within the BWP.

The BWP may include a BWP for the UL (UL BWP) and a BWP for the DL (DL BWP). One or a plurality of BWPs may be configured in one carrier for a UE.

At least one of configured BWPs may be active, and a UE does not need to assume to transmit/receive a certain signal/channel outside active BWPs. Note that a "cell", a "carrier", and so on in the present disclosure may be interpreted as a "BWP".

Note that the above-described structures of radio frames, subframes, slots, mini-slots, symbols and so on are merely examples. For example, structures such as the number of subframes included in a radio frame, the number of slots per subframe or radio frame, the number of mini-slots included in a slot, the number of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to certain values, or may be represented in another corresponding information. For example, radio resources may be specified by certain indices.

The names used for parameters and so on in the present disclosure are in no respect limiting. In addition, mathematical expressions that use these parameters, and so on may be different from those expressly disclosed in the present disclosure. For example, since various channels (PUCCH (Physical Uplink Control CHannel), PDCCH (Physical Downlink Control CHannel) and so on) and information elements can be identified by any suitable names, the various names assigned to these individual channels and information elements are in no respect limiting.

The information, signals and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Further, information, signals, and so on can be output in at least one of from higher layers to lower layers and from lower layers to higher layers. Information, signals and/or so on may be input and output via a plurality of network nodes.

The information, signals and so on that are input and/or output may be stored in a specific location (for example, a memory), or may be managed by using a management table. The information, signals, and so on to be input and/or output can be overwritten, updated, or appended. The information, signals and so on that are output may be deleted. The information, signals and so on that are input may be transmitted to other pieces of apparatus.

The notification of information is by no means limited to the aspects/embodiments described in the present disclosure, and other methods may be used as well. For example, notification of information may be implemented by using physical layer signaling (for example, downlink control information (DCI), uplink control information (UCI), higher layer signaling (for example, RRC (Radio Resource Control) signaling, broadcast information (master information block (MIB), system information blocks (SIBs) and so on), MAC (Medium Access Control) signaling and so on), and other signals and/or combinations of these.

Note that physical layer signaling may be referred to as "L1/L2 (Layer 1/Layer 2) control information (L1/L2 control signals)," "L1 control information (L1 control signal)" and so on. Also, RRC signaling may be referred to as "RRC messages," and can be, for example, an RRC connection setup (RRCConnectionSetup) message, RRC connection reconfiguration (RRCConnectionReconfiguration) message, and so on. Also, MAC signaling may be notified using, for example, MAC control elements (MAC CEs (Control Elements)) .

Also, notification of certain information (for example, notification "being X") does not necessarily have to be notified explicitly, but can be notified implicitly (for example, by not notifying the certain information or by notifying another piece of information).

Determinations may be made in values represented by one bit (0 or 1), may be made in Boolean values that represent true or false, or may be made by comparing numerical values (for example, comparison with a certain value).

Software, whether or not referred to as "software," "firmware," "middleware," "microcode" or "hardware description language," or called by other terms, should be interpreted broadly, to mean instructions, instruction sets, code, code segments, program codes, programs, subprograms, software modules, applications, software applications, software packages, routines, subroutines, objects, executable files, execution threads, procedures, functions and so on.

Also, software, instructions, information and so on may be transmitted and received via transmission media. For example, when software is transmitted from a website, a server or other remote sources by using at least one of wired technologies (coaxial cables, optical fiber cables, twisted-pair cables, digital subscriber lines (DSLs), and so on) and wireless technologies (infrared radiation, microwaves, and so on), at least one of these wired technologies and wireless technologies are also included in the definition of communication media.

The terms "system" and "network" as used in the present disclosure may be used interchangeably.

In the present disclosure, the terms such as "precoding", "precoder", "weight (precoding weight)", "quasi-co-location (QCL)", "transmission power", "phase rotation", "antenna port", "antenna port group", "layer", " "number of layers", "rank", "beam", "beam width", "beam angle", "antenna", "antenna element", and "panel" may be used interchangeably.

In the present disclosure, the terms such as "base station (BS)", "radio base station", "fixed station", "NodeB", "eNodeB (eNB)", "gNodeB (gNB)", "access point", "transmission point (TP)", "reception point (RP)", "transmission/reception point (TRP)", "panel", "cell", "sector", "cell group", "carrier," and "component carrier" and so on can be used interchangeably. The base station may be referred to as the terms such as a macro cell, a small cell, a femto cell, a pico cell, and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (RRHs (Remote Radio Heads))). The term "cell" or "sector" refers to part of or the entire coverage area of at least one of a base station and a base station subsystem that provides communication services within this coverage.

In the present disclosure, the terms such as "mobile station (MS)", "user terminal", "user equipment (UE)", and "terminal" may be used interchangeably.

A mobile station may be referred to as a subscriber station, mobile unit, subscriber unit, wireless unit, remote unit, mobile device, wireless device, wireless communication device, remote device, mobile subscriber station, access terminal, mobile terminal, wireless terminal, remote terminal, handset, user agent, mobile client, client, or some other appropriate terms in some cases.

At least one of a base station and a mobile station may be referred to as transmitting apparatus, receiving apparatus, communication apparatus and so on. Note that at least one of a base station and a mobile station may be a device mounted on a mobile entity or a mobile entity itself, and so on. The mobile entity may be a vehicle (for example, a car, an airplane, and the like), may be a mobile entity which moves unmanned (for example, a drone, an automatic operation car, and the like), or may be a robot (a manned or unmanned type). Note that at least one of a base station and a mobile station also includes an apparatus which does not necessarily move during communication operation. For example, at least one of the base station and the mobile station may be an IoT (Internet of Things) device such as a sensor.

Furthermore, the base stations in the present disclosure may be interpreted as the user terminal. For example, each aspect/embodiment of the present disclosure may be applied to the structure that replaces a communication between a radio base station and a user terminal with a communication between a plurality of user terminals (for example, which may be referred to as D2D (Device-to-Device), V2X (Vehicle-to-Everything) and the like). In this case, the user terminal 20 may have the functions of the base station 10 described above. In addition, the wording such as "uplink" and "downlink" may be interpreted as the wording corresponding to the terminal-to-terminal communication (for example, "side"). For example, an uplink channel, a downlink channel and so on may be interpreted as a side channel.

Likewise, the user terminal in the present disclosure may be interpreted as the base station. In this case, the base station 10 may have the functions of the user terminal 20 described above.

Actions which have been described in the present disclosure to be performed by a base stations may, in some cases, be performed by their upper nodes. In a network of including one or a plurality of network nodes with base stations, it is clear that various operations that are performed to communicate with terminals can be performed by base stations, one or more network nodes (for example, MMEs (Mobility Management Entities), S-GWs (Serving-Gateways) and so on may be possible, but these are not limiting) other than base stations, or combinations of these.

The aspects/embodiments described in the present disclosure may be used individually or in combinations, which may be switched depending the mode of on implementation. The order of processing, sequences, flowcharts and so on that have been used to describe the aspects/embodiments in the present disclosure may be reordered as long as inconsistencies do not arise. For example, although various methods have been described in the present disclosure with various components of steps in exemplary orders, the specific orders that are shown herein are by no means limiting.

The aspects/embodiments described in the present disclosure may be applied to LTE (Long Term Evolution), LTE-A (LTE-Advanced), LTE-B (LTE-Beyond), SUPER 3G, IMT-Advanced, 4G (4th generation mobile communication system), 5G (5th generation mobile communication system), FRA (Future Radio Access), New-RAT (Radio Access Technology), NR(New Radio), NX (New radio access), FX (Future generation radio access), GSM (registered trademark) (Global System for Mobile communications), CDMA 2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), systems that use other adequate radio communication methods and next generation systems that are enhanced based on these, for example. Further, a plurality of systems may be combined (for example, a combination of LTE or LTE-A and 5G and so on) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first," "second" and so on as used in the present disclosure does not generally limit the number/quantity or order of these elements. These designations may be used in the present disclosure as a convenient way, for distinguishing between two or more elements. Thus, reference to the first and second elements does not imply that only two elements may be employed, or that the first element must precede the second element in some way.

The terms "judging (determining)" as used in the present disclosure may encompass a wide variety of operations. For example, "judging (determining)" may be interpreted to mean making "judgments (determinations)" about judging, calculating, computing, processing, deriving, investigating, looking up, search, inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" may be interpreted to mean making "judgments (determinations)" about resolving, selecting, choosing, establishing, comparing, and so on. In other words, "judging (determining)" may be interpreted to mean making "judgements (determinations)" related to some action.

In addition, "judging (determining)" may be interpreted as "assuming", "expecting", "considering" and so on.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical or a combination of these. For example, "connection" may be interpreted as "access".

In the present disclosure, when two elements are connected, the two elements may be considered "connected" or "coupled" to each other by using one or more electrical wires, cables, printed electrical connections, and the like, and, as some non-limiting and non-inclusive examples, by using electromagnetic energy having wavelengths in radio frequency regions, microwave regions, (both visible and invisible) light regions, or the like.

In the present disclosure, the phrase "A and B are different" may mean that "A and B are different from each other." Note that the phrase may mean that "A and B is each different from C". The terms "separate," "be coupled," and so on may be interpreted similarly to "different.

When the terms such as "include," "including", and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the scope of the invention defined by the recitations of claims. Consequently, the description of the present disclosure is provided only for the purpose of explaining examples, and should by no means be construed to limit the invention according to the present disclosure in any way.

## Claims

1. A terminal (20) comprising:
a receiving section (203) configured to receive a first radio link monitoring reference signal configured for a first bandwidth part, BWP, in the first BWP; and
a control section (401) configured to control, when switching from the first BWP to a second BWP occurs based on a downlink control information, DCI, performing of radio link monitoring in the active second BWP by using, after a given period of the switching a second radio link monitoring reference signal configured for the second BWP;
wherein the control section (401) is configured to not use a measurement result of the first radio link monitoring reference signal configured for the first BWP after the switching regardless of a quasi-co-location relationship between the first radio link monitoring reference signal and the second radio link monitoring reference signal.

2. The terminal according to claim 1, wherein the receiving section (203) is configured to not receive a radio link monitoring reference signal during the given period, wherein the given period is a delay period caused by the switching from the first BWP to the second BWP.

3. A radio communication method for a terminal (20), the method comprising:
receiving a first radio link monitoring reference signal configured for a first bandwidth part, BWP, in the first BWP, and
controlling, when switching from the first BWP to a second BWP occurs based on a downlink control information, DCI, performing of radio link monitoring in the active second BWP by using, after a given period of the switching, a second radio link monitoring reference signal configured for the second BWP;
wherein the controlling does not use a measurement result of the first radio link monitoring reference signal configured for the first BWP after the switching regardless of a quasi-co-location relationship between the first radio link monitoring reference signal and the second radio link monitoring reference signal.

4. A base station (10) comprising:
a transmitting section (103) configured to transmit a first radio link monitoring reference signal configured for a first bandwidth part, BWP, in the first BWP; and
a control section (301) configured to control, when switching from the first BWP to a second BWP occurs based on a downlink control information, DCI, reception of a report regarding radio link monitoring performed in the active second BWP by using, after a given period of the switching, a second radio link monitoring reference signal configured for the second BWP;
wherein a measurement result of the first radio link monitoring reference signal configured for the first BWP is not used after the switching regardless of a quasi-co-location relationship between the first radio link monitoring reference signal and the second radio link monitoring reference signal.

5. A system comprising a terminal (20) according to any of claims 1-2 and a base station (10) according to claim 4.

## Patentansprüche

1. Endgerät (20), das umfasst:
einen Empfangsabschnitt (203), der so konfiguriert ist, dass er ein erstes Funkverbindungsüberwachungsreferenzsignal empfängt, das für einen ersten Bandbreitenteil, BWP, in dem ersten BWP konfiguriert ist; und
einen Steuerabschnitt (401), der so konfiguriert ist, dass er, wenn eine Umschaltung von dem ersten BWP zu einem zweiten BWP auf der Grundlage einer Abwärtsverbindungssteuerinformation, DCI, erfolgt, die Durchführung einer Funkverbindungsüberwachung in dem aktiven zweiten BWP steuert, indem er nach einer gegebenen Periode der Umschaltung ein zweites Funkverbindungsüberwachungsreferenzsignal verwendet, das für den zweiten BWP konfiguriert ist;
wobei der Steuerabschnitt (401) so konfiguriert ist, dass er ein Messergebnis des ersten Funkverbindungsüberwachungsreferenzsignals, das für den ersten BWP konfiguriert ist, nach der Umschaltung nicht verwendet, ungeachtet einer Quasi-Co-Locations-Beziehung zwischen dem ersten Funkverbindungsüberwachungsreferenzsignal und dem zweiten Funkverbindungsüberwachungsreferenzsignal.

2. Endgerät nach Anspruch 1, wobei der Empfangsabschnitt (203) so konfiguriert ist, dass er während der gegebenen Periode kein Funkverbindungsüberwachungsreferenzsignal empfängt, wobei die gegebene Periode eine Verzögerungsperiode ist, die durch die Umschaltung von dem ersten BWP zu dem zweiten BWP verursacht wird.

3. Funkkommunikationsverfahren für ein Endgerät (20), wobei das Verfahren umfasst:
Empfangen eines ersten Funkverbindungsüberwachungsreferenzsignals, das für einen ersten Bandbreitenteil, BWP, in dem ersten BWP konfiguriert ist, und
Steuern, wenn eine Umschaltung von dem ersten BWP zu einem zweiten BWP erfolgt, auf der Grundlage einer Abwärtsverbindungssteuerinformation, DCI, einer Durchführung einer Funkverbindungsüberwachung in dem aktiven zweiten BWP durch Verwenden eines zweiten Funkverbindungsüberwachungsreferenzsignals, das für den zweiten BWP konfiguriert ist, nach einer gegebenen Periode der Umschaltung;
wobei die Steuerung ein Messergebnis des ersten Funkverbindungsüberwachungsreferenzsignals, das für den ersten BWP konfiguriert ist, nach der Umschaltung nicht verwendet, ungeachtet einer Quasi-Co-Locations-Beziehung zwischen dem ersten Funkverbindungsüberwachungsreferenzsignal und dem zweiten Funkverbindungsüberwachungsreferenzsignal.

4. Basisstation (10), die umfasst:
einen Übertragungsabschnitt (103), der so konfiguriert ist, dass er ein erstes Funkverbindungsüberwachungsreferenzsignal überträgt, das für einen ersten Bandbreitenteil, BWP, in dem ersten BWP konfiguriert ist; und
einen Steuerabschnitt (301), der so konfiguriert ist, dass er, wenn eine Umschaltung von dem ersten BWP zu einem zweiten BWP erfolgt, auf der Grundlage einer Abwärtsverbindungssteuerinformation, DCI, einen Empfang eines Berichts bezüglich der Funkverbindungsüberwachung, die in dem aktiven zweiten BWP durchgeführt wird, steuert, indem er nach einer gegebenen Periode der Umschaltung ein zweites Funkverbindungsüberwachungsreferenzsignal verwendet, das für den zweiten BWP konfiguriert ist;
wobei ein Messergebnis des ersten Funkverbindungsüberwachungsreferenzsignals, das für den ersten BWP konfiguriert ist, nach der Umschaltung nicht verwendet wird, unabhängig von einer Quasi-Co-Locations-Beziehung zwischen dem ersten Funkverbindungsüberwachungsreferenzsignal und dem zweiten Funkverbindungsüberwachungsreferenzsignal.

5. System, das ein Endgerät (20) nach einem der Ansprüche 1 - 2 und eine Basisstation (10) nach Anspruch 4 umfasst.

## Revendications

1. Terminal (20) comprenant :
une section de réception (203) configurée pour recevoir un premier signal de référence de surveillance de liaison radio configuré pour une première partie de largeur de bande, BWP, dans la première BWP ; et
une section de commande (401) configurée pour commander, lorsqu'une commutation de la première BWP à une deuxième BWP se produit sur la base d'informations de commande de liaison descendante, DCI, la réalisation d'une surveillance de liaison radio dans la deuxième BWP active en utilisant, après une période donnée de la commutation, un deuxième signal de référence de surveillance de liaison radio configuré pour la deuxième BWP ;
dans lequel la section de commande (401) est configurée pour ne pas utiliser un résultat de mesure du premier signal de référence de surveillance de liaison radio configuré pour la première BWP après la commutation, indépendamment d'une relation de quasi-co-localisation entre le premier signal de référence de surveillance de liaison radio et le deuxième signal de référence de surveillance de liaison radio.

2. Terminal selon la revendication 1, dans lequel la section de réception (203) est configurée pour ne pas recevoir un premier signal de référence de surveillance de liaison radio pendant la période donnée, dans lequel la période donnée est une période de retard causée par la commutation de la première BWP à la deuxième BWP.

3. Procédé de radiocommunication pour un terminal (20), le procédé comprenant :
la réception d'un premier signal de référence de surveillance de liaison radio configuré pour une première partie de largeur de bande, BWP, dans la première BWP, et
la commande, lorsqu'une commutation de la première BWP à une deuxième BWP se produit sur la base d'informations de commande de liaison descendante, DCI, de la réalisation d'une surveillance de liaison radio dans la deuxième BWP active en utilisant, après une période donnée de la commutation, un deuxième signal de référence de surveillance de liaison radio configuré pour la deuxième BWP ;
dans lequel la commande n'utilise pas un résultat de mesure du premier signal de référence de surveillance de liaison radio configuré pour la première BWP après la commutation, indépendamment d'une relation de quasi-co-localisation entre le premier signal de référence de surveillance de liaison radio et le deuxième signal de référence de surveillance de liaison radio.

4. Station de base (10) comprenant :
une section de transmission (103) configurée pour transmettre un premier signal de référence de surveillance de liaison radio configuré pour une première partie de largeur de bande, BWP, dans la première BWP ; et
une section de commande (301) configurée pour commander, lorsqu'une commutation de la première BWP à une deuxième BWP se produit sur la base d'informations de commande de liaison descendante, DCI, la réception d'un rapport relatif à une surveillance de liaison radio réalisée dans la deuxième BWP active en utilisant, après une période donnée de la commutation, un deuxième signal de référence de surveillance de liaison radio configuré pour la deuxième BWP ;
dans laquelle un résultat de mesure du premier signal de référence de surveillance de liaison radio configuré pour la première BWP n'est pas utilisé après la commutation, indépendamment d'une relation de quasi-co-localisation entre le premier signal de référence de surveillance de liaison radio et le deuxième signal de référence de surveillance de liaison radio.

5. Système comprenant un terminal (20) selon l'une quelconque des revendications 1 et 2 et une station de base (10) selon la revendication 4.
